# EUROPÄISCHE PATENTANMELDUNG

(11) **EP 1 108 628 A2**
(43) Veröffentlichungstag der Anmeldung: **20.06.2001**
(21) Anmeldenummer: 00124008.4
(22) Anmeldetag: 04.11.2000
(51) Int. Cl.: B60R 22/36

(54) **Beheizbarer Sicherheitsgurtaufrollautomat**

(30) Priorität: 18.12.1999 DE 19961318
(71) Anmelder: Bayerische Motoren Werke Aktiengesellschaft, 80809 München (DE)
(72) Erfinder: Decker, Hubert, 84097 Herrngiersdorf (DE); Bleicher, Stephan, 84069 Schierling (DE)

(57) **Zusammenfassung**

Es wird ein Sicherheitsgurtaufrollautomat zum Aufwickeln von Gurtband beschrieben, mit einer Blockiereinrichtung zum automatischen Verhindern des Gurtbandauszugs aufgrund bestimmter Fahrbedingungen, mit einer Sensoreinrichtung zum detektieren der Fahrbedingungen und mit einer elektrischen Einrichtung, der sich dadurch auszeichnet, daß die elektrische Einrichtung bei Bedarf dazu benutzt werden kann, den Sicherheitsgurtaufrollautomaten wenigstens im Bereich der Sensor-oder der Blockiereinrichtung aufzuheizen. Außerdem kann eine feuchtigkeitsaufnehmende Einrichtung ebenfalls dazu benutzt werden, im Innenraum des Sicherheitsgurtaufrollautomaten, wenigstens im Bereich der Sensor- oder der Blockiereinrichtung, die Luftfeuchtigkeit zu verringern.

## Beschreibung

Die Erfindung bezieht sich auf einen Sicherheitsgurtaufrollautomaten für ein Kraftfahrzeug nach dem Oberbegriff des Anspruchs 1.

Sicherheitsgurte wurden vorwiegend in geschlossenen Räumen, nämlich im Inneren von Kraftfahrzeugen, installiert. Dadurch sind diese den Witterungseinflüssen nicht direkt ausgesetzt. Inzwischen sind Zweiräder bekannt geworden, die ebenfalls mit Sicherheitsgurten ausgerüstet sind. Da diese der Witterung ausgesetzt sind, besteht die Möglichkeit, daß Wasser in die Sicherheitsgurtaufrollautomaten eindringt, was im Winter dazu führen kann, daß ein Sicherheitsgurtaufrollautomat einfriert, was wiederum die Verwendung des Sicherheitsgurtes verhindert.

Für die Verwendung bei Zweirädern wurden Sicherheitsgurtschlösser mit einer elektrischen Einrichtung bekannt, die dadurch gekennzeichnet sind, daß die elektrische Einrichtung bei Bedarf dazu benutzt werden kann, das Sicherheitsgurtschloß mindestens im Bereich der Einrast- und Löseeinrichtung für die Gurtzunge aufzuheizen. Ein solches Sicherheitsgurtschloß, wie in der DE 199 17 501 A1 beschrieben, verhindert nicht das Einfrieren eines Sicherheitsgurtautomaten aufgrund von Witterungseinflüssen im Freien.

Deshalb ist es Aufgabe der Erfindung, einen Sicherheitsgurtaufrollautomaten für ein Kraftfahrzeug bereitzustellen, bei dem im Außenbereich, der Witterung ausgesetzt, bei Umgebungstemperaturen unter 0° Celsius jederzeit ohne Funktionsausfall ein Blockieren bzw. ein Ein- bzw. Auszug des Gurtbands möglich ist.

Die Aufgabe der Erfindung wird mit den kennzeichnenden Merkmalen der Ansprüche 1 oder 2 gelöst. Weitere Ausgestaltungen der Erfindung ergeben sich aus den Unteransprüchen.

Nach der Erfindung ist ein Sicherheitsgurtaufrollautomat zum Aufwickeln von Gurtband, mit einer Blockiereinrichtung zum automatischen Verhindern des Gurtbandauszugs aufgrund bestimmter Fahrbedingungen, mit einer Sensoreinrichtung zum Detektieren der Fahrbedingungen und mit einer elektrischen Einrichtung, dadurch gekennzeichnet, daß die elektrische Einrichtung bei Bedarf dazu benutzt werden kann, den Sicherheitsgurtaufrollautomaten wenigstens im Bereich der Sensor- oder der Blockiereinrichtung aufzuheizen.

Eine Heizeinrichtung, die der Temperaturerhöhung im Bereich der beweglichen Teile der Mechanik des Sicherheitsgurtaufrollautomaten dient, hat den Vorteil, daß beim Eindringen von Wasser in die Sicherheitsgurtaufrollautomatmechanik und bei Temperaturen unter 0° Celsius, dieses Wasser aufgeheizt werden kann. Dadurch wird ein Einfrieren der Sicherheitsgurtaufrollautomatmechanik und dadurch der Funktionsausfall des Sicherheitsgurtsystems verhindert.

Dieselbe Aufgabe wird auch durch einen Sicherheitsgurtaufrollautomaten zum Aufwickeln von Gurtband, mit einer Blockiereinrichtung zum automatischen Verhindern des Gurtbandauszugs aufgrund bestimmter Fahrbedingungen und mit einer Sensoreinrichtung zum detektieren der Fahrbedingungen, dadurch gelöst, daß eine feuchtigkeitsaufnehmende Einrichtung dazu benutzt werden kann, im Innenraum des Sicherheitsgurtaufrollautomaten wenigstens im Bereich der Sensor- oder der Blockiereinrichtung die Luftfeuchtigkeit zu verringern.

Eine feuchtigkeitsaufnehmende Einrichtung, die der Verringerung der Luftfeuchtigkeit im Bereich der beweglichen Teile der Mechanik des Sicherheitsgurtaufrollautomaten dient, hat den Vorteil, daß beim Eindringen von Wasser in die Sicherheitsgurtaufrollautomatmechanik dieses der Luft entzogen werden kann und dadurch, bei Temperaturen unter 0° Celsius, ein Einfrieren der Sicherheitsgurtaufrollautomatmechanik und der Funktionsausfall des Sicherheitsgurtsystems verhindert wird.

Eine bevorzugte Ausführung der Erfindung sieht vor, sowohl eine Heizeinrichtung als auch eine feuchtigkeitsaufnehmende Einrichtung zu verwenden. Dies hat vorteilhafterweise die Kombination aller bereits genannten Vorteile zur Folge.

Bei einer vorteilhaften Ausführung der Erfindung besteht die elektrische Einrichtung mindestens aus einer elektrischen Stromversorgung und aus einem elektrischen Heizelement. Das Aufheizen der Mechanik des Sicherheitsgurtaufrollautomaten durch mindestens ein in diesen integriertes elektrisches Heizelement hat den Vorteil, daß die Sicherheitsgurtaufrollautomatheizung einfach aufgebaut ist. So kann das elektrische Heizelement als Heizfolie und/oder als Leistungswiderstand und/oder als Halogenbirne und/oder als Mikrowellenerzeuger und/oder als eine Lichtquelle mit einem Linsensystem ausgebildet sein.

Wird das elektrische Heizelement zeitgetaktet bestromt, ist durch diese vorteilhafte Regelung oder Steuerung ein andauernder Betrieb der Heizeinrichtung möglich, ohne daß das elektrische Bordsystem zu stark belastet wird.

Bei einer weiteren vorteilhaften Ausführung der Erfindung ist ein elektrischer Schalter zum Ein- bzw. Ausschalten des Heizelements vorhanden. Das hat den Vorteil, daß die Sicherheitsgurtaufrollautomatheizung manuell gesteuert werden kann.

Bei einer weiteren bevorzugten Ausführung der Erfindung wird eine Wärmeleitpaste oder eine Oberflächenbedampfung dazu benutzt, daß die Wärme des Heizelements an die einfriergefährdeten Bauteile des Sicherheitsgurtaufrollautomaten geleitet wird.

Vorteilhafterweise wird hierdurch eine noch sicherere Funktion der Mechanik des Sicherheitsgurtaufrollautomaten unter Winterbedingungen gewährleistet.

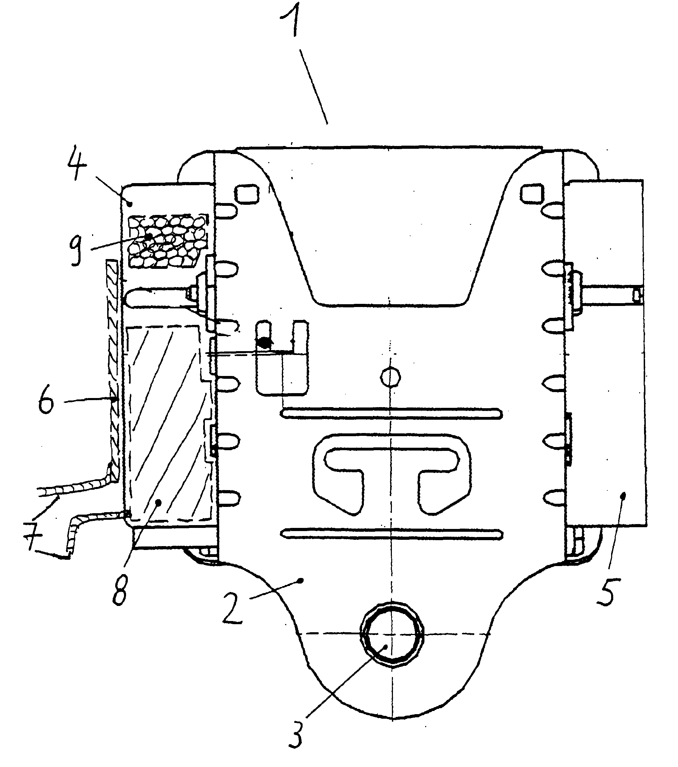

Ein bevorzugtes Ausführungsbeispiel der Erfindung ist in der nachfolgenden Beschreibung und der zugehörigen Zeichnung näher dargestellt. Die einzige Figur zeigt einen Teilschnitt eines Sicherheitsgurtaufrollautomaten für ein Zweirad.

Mit der Bezugsziffer 1 ist ein Sicherheitsgurtaufrollautomat bezeichnet, der fest mit einem Sicherheitsgurtaufrollautomatenrückenblech 2 verbunden ist. Das Sicherheitsgurtaufrollautomatenrückenblech 2 dient dazu, den Sicherheitsgurtaufrollautomaten 1 mit dem nicht gezeichneten Zweirad zu verbinden. Dazu ist am unteren Ende des Sicherheitsgurtaufrollautomatenrückenblechs 2 eine Bohrung 3 angebracht, die mit üblichen Befestigungsmitteln eine abreißsichere Verbindung zum Zweirad gewährleistet. Der Sicherheitsgurtaufrollautomat 1 besitzt ein dreigeteiltes Gehäuse, wovon nur ein Teil, der die Sensorik unter einer Abdeckkappe 4 aufnimmt, geschnitten dargestellt ist. Eine Rückzugsfederabdeckkappe 5 ist nur als Draufsicht dargestellt und eine Aufrollmechanik ist nicht dargestellt. Diese ist entsprechend der von bereits bekannten Sicherheitsgurtaufrollautomaten ausgeführt. Sie blockiert, durch eine bekannte und hier nicht sichtbare Einrasteinrichtung, eine Gurtaufwickelwelle automatisch, wenn durch die Sensorik bestimmte Fahrbedingungen detektiert werden.

An der Abdeckkappe 4 ist eine elektrische Stromzuführung 7 angebracht, die ein nicht gezeichnetes elektrisches Bordsystem des Zweirads mit einem im Sicherheitsgurtaufrollautomaten 1 integrierten Heizelement 8 verbindet. Das Heizelement 8 ist symbolisch durch einen gestrichelt gezeichneten Formkörper dargestellt, da es zum Beispiel eine Heizfolie und/oder ein Leistungswiderstand und/oder eine Halogenbirne und/oder ein Mikrowellenerzeuger sein kann. Außerdem verbindet die elektrische Stromzuführung 7 das nicht gezeichnete elektrische Bordsystem des Zweirads mit einem außen am Sicherheitsgurtaufrollautomaten 1 angebrachten weiteren Heizelement 6. Hier könnte zusätzlich durch "warmes" Licht und ein Linsensystem eine Heizwirkung erzielt werden. Beide Heizelemente 6,8 sind an der Stelle am oder im Sicherheitsgurtaufrollautomaten 1 angebracht, an der die Sicherheitsgurtaufrollautomatmechanik zum Blockieren des Gurtbandauszugs aufgrund bestimmter Fahrbedingungen und die Sensoreinrichtung zum Detektieren der Fahrbedingungen aufgrund von Umwelteinflüssen und Temperaturen unter 0° Celsius durch in den Sicherheitsgurtaufrollautomaten 1 eingedrungenes, nicht gezeichnetes und zu Eis erstarrtes Wasser, in ihren Funktionen beeinflußt werden können. Des weiteren könnte auch Motorabwärme mittels Leitblechen genutzt werden, eine Aufheizung des Sicherheitsgurtaufrollautomaten 1 zu erreichen.

Ebenfalls im Innenraum der Abdeckkappe 4 für die Sensoreinrichtung ist eine chemische Trocknungssubstanz 9 untergebracht. Dieses hygroskopisch wirkende Salz minimiert die Feuchtigkeit in der Nähe der Blockier- bzw. Sensoreinrichtung ohne daß es einer Energiezufuhr bedarf. Es kann in passender geometrischer Form in den noch zur Verfügung stehenden Raum unter der Abdeckkappe 4 eingebracht und bei Service - Inspektionen gewechselt werden.

## Patentansprüche

1. Sicherheitsgurtaufrollautomat (1) zum Aufwickeln von Gurtband, mit einer Blockiereinrichtung zum automatischen Verhindern des Gurtbandauszugs aufgrund bestimmter Fahrbedingungen, mit einer Sensoreinrichtung zum Detektieren der Fahrbedingungen und mit einer elektrischen Einrichtung, dadurch gekennzeichnet, daß die elektrische Einrichtung bei Bedarf dazu benutzt werden kann, den Sicherheitsgurtaufrollautomaten (1) wenigstens im Bereich der Sensor- oder der Blockiereinrichtung aufzuheizen.

2. Sicherheitsgurtaufrollautomat (1) zum Aufwickeln von Gurtband, mit einer Blockiereinrichtung zum automatischen Verhindern des Gurtbandauszugs aufgrund bestimmter Fahrbedingungen und mit einer Sensoreinrichtung zum Detektieren der Fahrbedingungen, dadurch gekennzeichnet, daß eine feuchtigkeitsaufnehmende Einrichtung dazu benutzt werden kann, im Innenraum des Sicherheitsgurtaufrollautomaten (1) wenigstens im Bereich der Sensor- oder der Blockiereinrichtung die Luftfeuchtigkeit zu verringern.

3. Sicherheitsgurtaufrollautomat (1) nach Anspruch 1, dadurch gekennzeichnet, daß eine feuchtigkeitsaufnehmende Einrichtung dazu benutzt werden kann, im Innenraum des Sicherheitsgurtaufrollautomaten (1) wenigstens im Bereich der Sensor- oder der Blockiereinrichtung die Luftfeuchtigkeit zu verringern.

4. Sicherheitsgurtaufrollautomat (1) nach einem der Ansprüche 1 oder 3, dadurch gekennzeichnet, daß die elektrische Einrichtung mindestens aus einer elektrischen Stromzuführung (7) und aus einem elektrischen Heizelement (6,8) besteht.

5. Sicherheitsgurtaufrollautomat (1) nach Anspruch 4, dadurch gekennzeichnet, daß das Heizelement (6,8) eine Heizfolie und/oder ein Leistungswiderstand und/oder eine Halogenbirne und/oder ein Mikrowellenerzeuger und/oder eine Lichtquelle mit einem Linsensystem ist.

6. Sicherheitsgurtaufrollautomat (1) nach Anspruch 4 oder 5, dadurch gekennzeichnet, daß das Heizelement (6,8) zeitgetaktet bestromt wird.

7. Sicherheitsgurtaufrollautomat (1) nach einem der Ansprüche 4 bis 6, dadurch gekennzeichnet, daß mindestens ein elektrischer Schalter zum Ein- bzw. Ausschalten des Heizelements (6,8) vorhanden ist.

8. Sicherheitsgurtaufrollautomat (1) nach einem der Ansprüche 4 bis 7, dadurch gekennzeichnet, daß zur Leitung der Wärme des Heizelements (6,8), Bauteile des Sicherheitsgurtaufrollautomaten (1) mit Wärmeleitpaste versehen oder oberflächenbedampft sind.

9. Sicherheitsgurtaufrollautomat (1) nach einem der Ansprüche 1 bis 8, dadurch gekennzeichnet, daß dieser für eine Sicherheitsgurteinrichtung eines Zweirads verwendet wird.
